# EUROPEAN PATENT APPLICATION

(11) **EP 3 040 912 A1**
(43) Date of publication of application: **06.07.2016**
(21) Application number: 15203170.4
(22) Date of filing: 30.12.2015
(51) Int. Cl.: G06K 9/62, G06F 3/0484

(54) **METHOD AND DEVICE FOR CLASSIFYING PICTURES**

(30) Priority: 30.12.2014 CN 201410838446
(71) Applicant: Xiaomi Inc., Beijing 100085 (CN)
(72) Inventor: CHEN, Zhijun, Beijing 100085 (CN); LONG, Fei, Beijing 100085 (CN); GUAN, Yayong, Beijing 100085 (CN)
(74) Representative: Fontenelle, Sandrine

(57) **Abstract**

The present invention relates to a method and a device for classifying pictures. The method includes: obtaining (101) classifying picture sets, in which a similarity between each two pictures in each classifying picture set is greater than a similarity threshold; recording (102) an operation instruction triggered with respect to each classifying picture set; if the operation instruction triggered with respect to any one of the classifying picture sets satisfies a predetermined updating condition, updating (103) the similarity threshold; classifying (104) pictures according to an updated similarity threshold. The device includes an obtaining module, a recording module, an updating module and a classifying module.

## Description

### TECHNICAL FIELD

The present invention generally relates to a picture processing technical field, and more particularly, to a method and a device for classifying (sorting) pictures.

### BACKGROUND

A terminal generally stores a great amount of pictures, such as photos taken by a user or downloaded pictures. When the user views pictures via the terminal, he or she often sees many similar pictures. Thus, there is a need to classify similar pictures.

There is provided a method for classifying pictures in the related art. The method includes: extracting by the terminal feature vectors of at least two pictures; calculating a similarity between each two pictures according to the feature vectors; and adding the pictures having a similarity greater than a similarity threshold to a classifying picture set, thus realizing a picture classifying.

During implementing the present invention, inventors have found that there are at least following problems in the related art.

Since different users have different similarity requirements on pictures to be classified, the terminal cannot generate classifying picture sets according to different picture similarity requirements of different users.

### SUMMARY

In order to overcome the problem that a terminal cannot generate classifying picture sets according to different picture similarity requirements of different users since different users have different similarity requirements on pictures to be classified, the present invention provides a method and a device for classifying (sorting) pictures.

According to embodiments of a first aspect of the present invention, there is provided a method for classifying (sorting) pictures, including:
obtaining classifying picture sets, in which a similarity between each two pictures in each classifying picture set is greater than a similarity threshold;
recording an operation instruction triggered with respect to each classifying picture set;
if the operation instruction triggered with respect to any one of the classifying picture sets satisfies a predetermined updating condition, updating the similarity threshold;
classifying pictures according to an updated similarity threshold.

In a particular embodiment, updating the similarity threshold if the operation instruction triggered with respect to a classifying picture set satisfies a predetermined updating condition includes:
detecting whether the operation instruction is configured for extracting a picture from any one of the classifying picture sets or configured for adding a picture to any one of the classifying picture sets;
if the operation instruction is configured for extracting a picture from any one of the classifying picture sets, increasing the similarity threshold;
if the operation instruction is configured for adding a picture to any one of the classifying picture sets, decreasing the similarity threshold.

In a particular embodiment, detecting whether the operation instruction is configured for extracting a picture from any one of the classifying picture sets or configured for adding a picture to any one of the classifying picture sets includes:
if the operation instruction includes an opening instruction, an extracting instruction and an adding instruction, multiplying a trigger count of the opening instruction by a first weight to obtain a first value, multiplying a trigger count of the extracting instruction by a second weight to obtain a second value, multiplying a trigger count of the adding instruction by a third weight to obtain a third value, and subtracting the third value from a sum of the first value and the second value to obtain a difference value;
if the difference value is positive and greater than a first threshold, determining that the operation instruction is configured for extracting a picture from any one of the classifying picture sets;
if the difference value is negative and less than a second threshold, determining that the operation instruction is configured for adding a picture to any one of the classifying picture sets.

In a particular embodiment, classifying pictures according to an updated similarity threshold includes:
determining a time similarity threshold according to the updated similarity threshold, in which the time similarity threshold is positively correlated with the similarity threshold, and the time similarity threshold is configured for indicating a similarity threshold between two pictures having a storage time difference less than a predetermined time threshold;
classifying pictures according to the updated similarity threshold and the time similarity threshold.

In a particular embodiment, classifying pictures according to the updated similarity threshold and the time similarity threshold includes:
calculating the similarity and the storage time difference between any two pictures;
if the storage time difference is less than the predetermined time threshold, classifying the pictures according to the similarity and the time similarity threshold;
if the storage time difference is greater than or equal to the predetermined time threshold, classifying the pictures according to the similarity and the similarity threshold.

According to embodiments of a second aspect of the present invention, there is provided a device for classifying pictures, including:
an obtaining module, configured to obtain classifying picture sets, in which a similarity between each two pictures in each classifying picture set is greater than a similarity threshold;
a recording module, configured to record an operation instruction triggered with respect to each classifying picture set;
an updating module, configured to update the similarity threshold if the operation instruction triggered with respect to any one of the classifying picture sets satisfies a predetermined updating condition;
a classifying module, configured to classify pictures according to an updated similarity threshold.

In a particular embodiment, the updating module includes:
an instruction detecting sub-module, configured to detect whether the operation instruction is configured for extracting a picture from any one of the classifying picture sets or configured for adding a picture to any one of the classifying picture sets;
a first processing sub-module, configured to increase the similarity threshold if the operation instruction is configured for extracting a picture from any one of the classifying picture sets;
a second processing sub-module, configured to decrease the similarity threshold if the operation instruction is configured for adding a picture to any one of the classifying picture sets.

In a particular embodiment, the operation instruction includes an opening instruction, an extracting instruction and an adding instruction, and the instruction detecting sub-module includes:
a difference value obtaining sub-module, configured to multiply a trigger count of the opening instruction by a first weight to obtain a first value, to multiply a trigger count of the extracting instruction by a second weight to obtain a second value, to multiply a trigger count of the adding instruction by a third weight to obtain a third value, and to subtract the third value from a sum of the first value and the second value to obtain a difference value;
a first determining sub-module, configured to determine that the operation instruction is configured for extracting a picture from any one of the classifying picture sets if the difference value is positive and greater than a first threshold;
a second determining sub-module, configured to determine that the operation instruction is configured for adding a picture to any one of the classifying picture sets if the difference value is negative and less than a second threshold.

In a particular embodiment, the classifying module includes:
a threshold determining sub-module, configured to determine a time similarity threshold according to the updated similarity threshold, in which the time similarity threshold is positively correlated with the similarity threshold, and the time similarity threshold is configured for indicating a similarity threshold between two pictures having a storage time difference less than a predetermined time threshold;
a picture classifying sub-module, configured to classify pictures according to the updated similarity threshold and the time similarity threshold.

In a particular embodiment, the picture classifying sub-module includes:
a calculating sub-module, configured to calculate the similarity and the storage time difference between any two pictures;
a third processing sub-module, configured to classify the pictures according to the similarity and the time similarity threshold if the storage time difference is less than the predetermined time threshold;
a fourth processing sub-module, configured to classify the pictures according to the similarity and the similarity threshold if the storage time difference is greater than or equal to the predetermined time threshold.

According to embodiments of a third aspect of the present invention, there is provided a device for classifying pictures, including a processor and a memory configured to store instructions executable by the processor, in which the processor is configured to:
obtain classifying picture sets, in which a similarity between each two pictures in each classifying picture set is greater than a similarity threshold;
record an operation instruction triggered with respect to each classifying picture set;
if the operation instruction triggered with respect to any one of the classifying picture sets satisfies a predetermined updating condition, update the similarity threshold;
classify pictures according to an updated similarity threshold.

In a particular embodiment, the steps of the method for classifying pictures are determined by program product instructions.

Consequently, according to a fourth aspect of the invention, there is provided a program product (e.g. a computer program) which, when being executed on one or more processors of a device, performs the method for classifying pictures mentioned above.

This program product can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solution provided by the embodiments of the present invention have the following advantageous effects: by obtaining classifying picture sets, in which a similarity between each two pictures in each classifying picture set is greater than a similarity threshold, by recording an operation instruction triggered with respect to each classifying picture set, by updating the similarity threshold if the operation instruction triggered with respect to any one of the classifying picture sets satisfies a predetermined updating condition, and by classifying pictures according to an updated similarity threshold, a problem that the terminal cannot generate classifying picture sets according to different picture similarity requirements of different users since different users have different similarity requirements on the pictures to be classified is solved, thus achieving an effect of generating classifying picture sets according to different picture similarity requirements of different users.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart of a method for classifying pictures according to an exemplary embodiment.
Fig. 2A is a flow chart of a method for classifying pictures according to another exemplary embodiment.
Fig. 2B is a schematic diagram showing extracting a picture from a classifying picture set according to another exemplary embodiment.
Fig. 2C is a schematic diagram showing adding a picture to a classifying picture set according to another exemplary embodiment.
Fig. 2D is a schematic diagram showing a picture classifying according to another exemplary embodiment.
Fig. 2E is a schematic diagram showing a picture arrangement according to another exemplary embodiment.
Fig. 3 is a block diagram of a device for classifying pictures according to an exemplary embodiment.
Fig. 4 is a block diagram of a device for classifying pictures according to an exemplary embodiment.
Fig. 5 is a block diagram of a device for classifying pictures according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

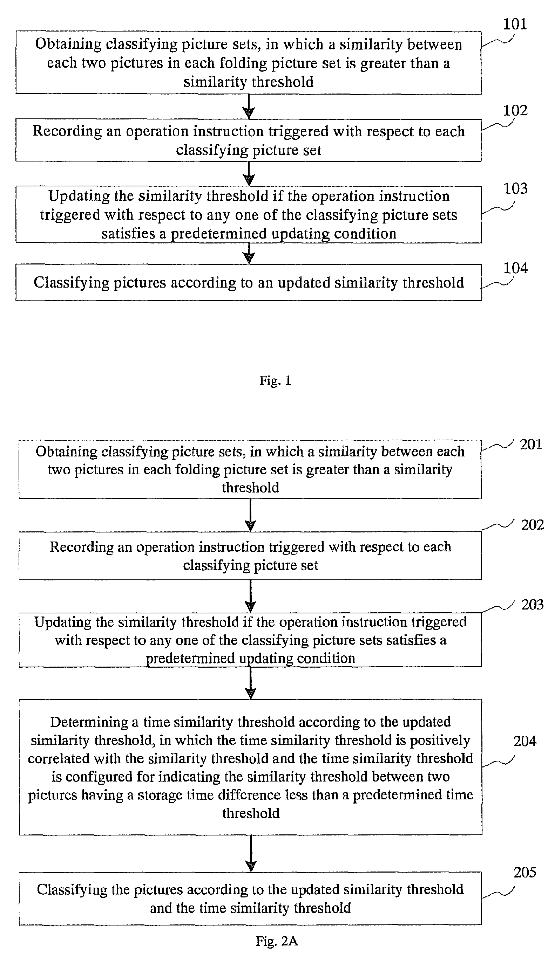

Fig. 1 is a flow chart of a method for classifying pictures according to an exemplary embodiment. As shown in Fig. 1, the method for classifying pictures is applied in a terminal and includes the following steps.

In step 101, classifying picture sets are obtained, in which a similarity between each two pictures in each classifying picture set is greater than a similarity threshold.

In step 102, an operation instruction triggered with respect to each classifying picture set is recorded.

In step 103, if the operation instruction triggered with respect to any one of the classifying picture sets satisfies a predetermined updating condition, the similarity threshold is updated.

In step 104, pictures are classified according to the updated similarity threshold.

In conclusion, with the method for classifying pictures provided by the present invention, by obtaining classifying picture sets, in which a similarity between each two pictures in each classifying picture set is greater than a similarity threshold, by recording an operation instruction triggered with respect to each classifying picture set, by updating the similarity threshold if the operation instruction triggered with respect to any one of the classifying picture sets satisfies a predetermined updating condition, and by classifying pictures according to an updated similarity threshold, a problem that the terminal cannot generate classifying picture sets according to different picture similarity requirements of different users since different users have different similarity requirements on the pictures to be classified may be solved, thus achieving an effect of generating classifying picture sets according to different picture similarity requirements of different users.

Fig. 2A is a flow chart of a method for classifying pictures according to another exemplary embodiment. As shown in Fig. 2A, the method for classifying pictures is applied in a terminal and includes following steps.

In step 201, classifying picture sets are obtained, in which a similarity between each two pictures in each classifying picture set is greater than a similarity threshold.

The terminal may classify pictures in the terminal, thus obtaining the classifying picture sets. The pictures in the terminal may be photos taken by the terminal or downloaded pictures. This step may include following steps:
1) the terminal extracts feature vectors of at least two pictures;
2) the terminal calculates the similarity between each two pictures according to the feature vectors;
3) the terminal adds the pictures having the similarity greater than the similarity threshold to the classifying picture set.

Since similar pictures have similar feature vectors, the terminal may calculate the similarity between each two pictures according to the extracted feature vectors. Technical solutions for calculating the similarity between two pictures are well known from the person skilled in the art and not described in details here. The feature vector is a vector for representing at least one of features such as a color feature, a textural feature, and a shape feature. The terminal compares the similarity between each two pictures with the predetermined similarity threshold of the classifying picture set, and adds the corresponding pictures to the classifying picture set if the similarity is greater than the similarity threshold.

If there is a same picture in two pairs of pictures having a similarity greater than the similarity threshold, all the three pictures are added to a same classifying picture set. For example, if the similarity threshold is 0.7, the similarity between picture A and picture B is 0.75, and the similarity between picture A and picture C is 0.8, then the terminal adds picture A, picture B and picture C to the same classifying picture set.

According to an illustrative example, it is assumed that there are twelve pictures, i.e., picture A, picture B, picture C, picture D, picture E, picture F, picture G, picture H, picture I, picture J, picture K and picture L, and that the terminal determines the similarities between each picture and other pictures as similarities shown in following Table 1 (only the representation letter of each picture is given in Table 1 when the similarities between each picture and other pictures are illustrated).

**Table 1**

| | A | B | C | D | E | F | G | H | I | J | K |
|---|---|---|---|---|---|---|---|---|---|---|---|
| B | 0.98 | | | | | | | | | | |
| C | 0.06 | 0.07 | | | | | | | | | |
| D | 0.05 | 0.07 | 0.99 | | | | | | | | |
| E | 0.08 | 0.05 | 0.96 | 0.97 | | | | | | | |
| F | 0.03 | 0.11 | 0.12 | 0.02 | 0.02 | | | | | | |
| G | 0.01 | 0.02 | 0.23 | 0.27 | 0.26 | 0.87 | | | | | |
| H | 0.25 | 0.29 | 0.05 | 0.07 | 0.02 | 0.01 | 0.04 | | | | |
| I | 0 | 0 | 0.25 | 0.26 | 0.28 | 0.31 | 0.37 | 0.10 | | | |
| J | 0.12 | 0.13 | 0.26 | 0.35 | 0.37 | 0.32 | 0.35 | 0.02 | 0.21 | | |
| K | 0.11 | 0.03 | 0.20 | 0.27 | 0.29 | 0.37 | 0.41 | 0.28 | 0.25 | 0.96 | |
| L | 0.13 | 0.15 | 0.21 | 0.26 | 0.23 | 0.35 | 0.42 | 0.30 | 0.27 | 0.97 | 0.99 |

Assuming that the similarity threshold is 0.8, it can be known from Table 1 that, the similarity between picture A and picture B is greater than the similarity threshold 0.8, the similarity between picture C and picture D is greater than the similarity threshold 0.8, the similarity between picture D and picture E is greater than the similarity threshold 0.8, the similarity between picture G and picture F is greater than the similarity threshold 0.8, the similarity between picture K and picture L is greater than the similarity threshold 0.8, and the similarity between picture L and picture J is greater than the similarity threshold 0.8. Thus, the terminal classifies picture A and picture B, picture C and picture D as well as picture E, picture G and picture F, picture K and picture L as well as picture J respectively, so as to form four classifying picture sets. It is assumed that picture A and picture B are classified to form a classifying picture set 21, picture C, picture D and picture E are classified to form a classifying picture set 22, picture G and picture F are classified to form a classifying picture set 23, and picture K, picture L and picture J are classified to form a classifying picture set 24.

In step 202, an operation instruction triggered with respect to each classifying picture set is recorded.

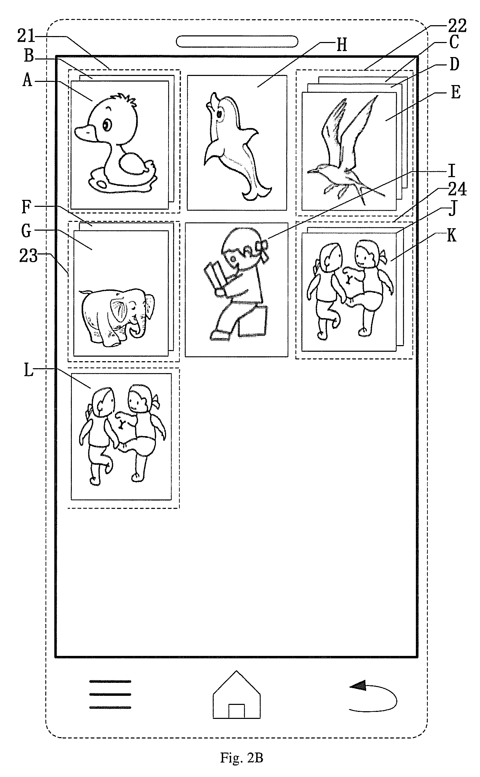

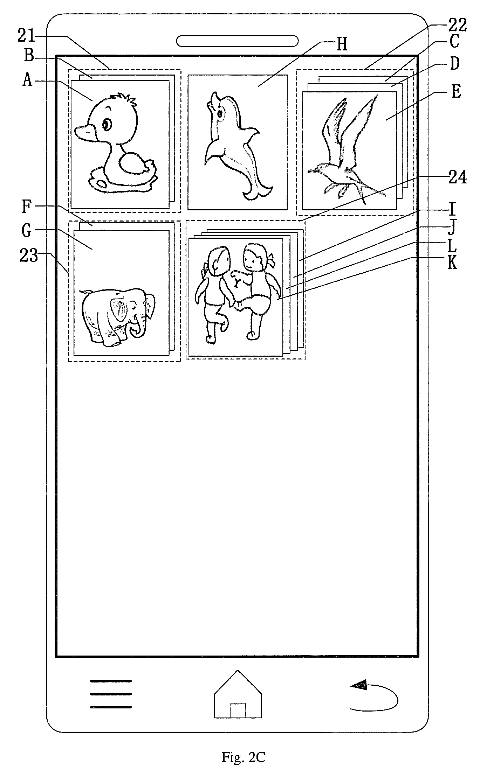

After obtaining the classifying picture sets, the terminal may record a type and a count or "trigger count" of the operation instruction triggered with respect to each classifying picture set. The operation instruction may include an opening instruction, an extracting instruction and an adding instruction. The opening instruction is configured for opening the classifying picture set. The extracting instruction is configured for extracting a picture from a classifying picture set. The adding instruction is configured for adding a picture to a classifying picture set. Fig. 2B shows extracting a picture from a classifying picture set, in which picture L is extracted from the classifying picture set 24 for displaying separately. Fig. 2C shows adding a picture to a classifying picture set, in which picture I is added to the classifying picture set 24.

In step 203, if the operation instruction triggered with respect to any one of the classifying picture sets satisfies a predetermined updating condition, the similarity threshold is updated.

If the terminal detects that the operation instruction triggered with respect to any one of the classifying picture sets satisfies the predetermined updating condition, the terminal updates the similarity threshold of all the classifying picture sets. The predetermined updating condition is associated with the type of the operation instruction, and the operation instruction may be an instruction configured for instructing the terminal to extract a picture from any one of the classifying picture sets, or the operation instruction may be an instruction for instructing the terminal to add a picture to any one of the classifying picture sets.

This step may include following steps:
1) detecting whether the operation instruction is configured for extracting a picture from any one of the classifying picture sets or configured for adding a picture to any one of the classifying picture sets;
2) if the operation instruction is configured for extracting a picture from any one of the classifying picture sets, increasing the similarity threshold;
3) if the operation instruction is configured for adding a picture to any one of the classifying picture sets, decreasing the similarity threshold.

In the first step, since the operation instructions triggered by the user include different types of instructions, the terminal should detect the type of the operation instruction triggered by the user with respect to each classifying picture set, and determine whether the operation instruction is configured for extracting a picture from any one of the classifying picture sets or configured for adding a picture to any one of the classifying picture sets according to a detection result.

In a possible implementation, the terminal may detect whether the operation instruction is configured for extracting a picture from any one of the classifying picture sets or configured for adding a picture to any one of the classifying picture sets by performing following steps.
1) If the operation instruction includes the opening instruction, the extracting instruction and the adding instruction, a trigger count of the opening instruction is multiplied by a first weight to obtain a first value, a trigger count of the extracting instruction is multiplied by a second weight to obtain a second value, a trigger count of the adding instruction is multiplied by a third weight to obtain a third value, and the third value is subtracted from a sum of the first value and the second value to obtain a difference value.
   For example, if the trigger count of the opening instruction is 100, the first weight is 0.2, the trigger count of the extracting instruction is 200, the second weight is 0.4, the trigger count of the adding instruction is 300, and the third weight is 0.4, then the terminal calculates that the first value is 20, the second value is 80, the third value is 120, and the difference value is -20.
2) If the difference value is positive and greater than a first threshold, it is determined that the operation instruction is configured for extracting a picture from any one of the classifying picture sets.
   If the difference value calculated by the terminal is positive and greater than the predetermined first threshold, then the operation performed by the user on the classifying picture set tends to extract a picture from the classifying picture set, and the terminal determines that the operation instruction triggered by the user is configured for extracting a picture from any one of the classifying picture sets, which satisfies the predetermined updating condition. The first threshold is positive.
   For example, if the difference value obtained by the terminal is 30 and the first threshold is 20, then the difference value is greater than the first threshold, and the terminal determines that the operation instruction is configured for extracting a picture from a classifying picture set.
3) If the difference value is negative and less than a second threshold, it is determined that the operation instruction is configured for adding a picture to any one of the classifying picture sets.

If the difference value obtained by the terminal is negative and less than the predetermined second threshold, the operation performed by the user on the classifying picture set tends to add a picture to the classifying picture set, and the terminal determines that the operation instruction is configured for adding a picture to the classifying picture set, which satisfies the predetermined updating condition. The second threshold is negative.

For example, if the difference value is -30 and the second threshold is -20, then the difference value is less than the second threshold, and the terminal determines that the operation instruction is configured for adding a picture to a classifying picture set.

In the second step, when the terminal detects that the operation instruction triggered by the user is configured for extracting a picture from any one of the classifying picture sets, the terminal increases the similarity threshold of all the classifying picture sets. The terminal may add a fixed value to the similarity threshold or may increase the similarity threshold by a fixed proportion.

For example, if the similarity threshold of classifying picture sets is 0.8 and the terminal detects that the operation instruction triggered by the user is configured for extracting a picture from any one of the classifying picture sets, then the terminal may add 0.01 to the similarity threshold and update the similarity threshold to be 0.81, or the terminal may increase the similarity threshold by 5% and update the similarity threshold to be 0.84.

In the third step, when the terminal detects that the operation instruction triggered by the user is configured for adding a picture to the classifying picture set, the similarity threshold of all the classifying picture sets is decreased. The terminal may subtract a fixed value from the similarity threshold or may decrease the similarity threshold by a fixed proportion.

For example, if the similarity threshold of the classifying picture set is 0.8 and the terminal detects that the operation instruction triggered by the user is configured for adding a picture to the classifying picture set, then the terminal may subtract 0.01 from the similarity threshold and update the similarity threshold to be 0.79, or the terminal may decrease the similarity threshold by 5% and update the similarity threshold to be 0.76.

In step 204, a time similarity threshold is determined according to the updated similarity threshold, in which the time similarity threshold is positively correlated with the similarity threshold, and the time similarity threshold is configured for indicating the similarity threshold between two pictures having a storage time difference less than a predetermined time threshold.

Generally, the closer the time when the user takes photos or downloads pictures is, the higher the similarity between photos or pictures is. For example, when the user takes photos using the continuous shooting mode, the obtained continuous photos always have a very small difference. Thus, the terminal may set the time similarity threshold according to the storage time, in which the time similarity threshold is configured for indicating the similarity threshold between two pictures having a storage time difference less than the predetermined time threshold, and the time similarity threshold is less than the similarity threshold.

In a possible implementation, the time similarity threshold may be positively correlated with the similarity threshold, that is, the time similarity threshold may increase with the increasing of the similarity threshold, and may decrease with the decreasing of the similarity threshold.

The time similarity threshold may be obtained in following ways.

The time similarity threshold may be equal to the similarity threshold multiplied by a fixed proportion, or the time similarity threshold may be equal to the similarity threshold minus a fixed value.

For example, if the similarity threshold of the classifying picture set is 0.8, then the time similarity threshold may be equal to the similarity threshold multiplied by 50%, i.e., 0.4; or, the time similarity threshold may be equal to the similarity threshold minus 0.1, i.e., 0.7.

It should be noted that, after updating the similarity threshold of the classifying picture sets, the terminal may also update the time similarity threshold according to the updated similarity threshold.

For example, if the similarity threshold of the classifying picture sets is updated to be 0.7, then the terminal may multiply the similarity threshold by 50% to obtain the time similarity threshold 0.35, or the terminal may subtract 0.2 from the similarity threshold to obtain the time similarity threshold 0.5.

Furthermore, the time similarity threshold may be a predetermined value, which increases or decreases with the increasing or decreasing of the similarity threshold. In embodiments of the present invention, the obtaining way of the time similarity threshold is not limited.

In step 205, the pictures are classified according to the updated similarity threshold and time similarity threshold.

The terminal may classify the newly added pictures according to the updated similarity threshold and time similarity threshold, or may extract pictures from the original classifying picture sets and classify these pictures according to the updated similarity threshold and time similarity threshold, thus generating new classifying picture sets.

The step of classifying pictures by the terminal according to the updated similarity threshold and time similarity threshold includes:
1) calculating the similarity and storage time difference between any two pictures;
2) if the storage time difference is less than the predetermined time threshold, classifying the pictures according to the calculated similarity and the time similarity threshold;
3) if the storage time difference is greater than or equal to the predetermined time threshold, classifying the pictures according to the calculated similarity and the similarity threshold.

In the first step, the terminal may calculate the similarity and storage time difference between any two pictures. The calculation of the similarity between any two pictures has already been explained in step 201, which is not elaborated herein. The storage time difference is an absolute value of a difference obtained from a difference of the storage time of the two pictures.

For example, if the storage time of picture A is 01:21:00 on November 11, 2014, and the storage time of picture B is 01:20:00 on November 11, 2014, then the storage time difference between picture A and picture B is one minute.

In the second step, the terminal detects whether the storage time difference between any two pictures is less than the predetermined time threshold, if the storage time difference is less than the predetermined time threshold, the terminal compares the similarity between two pictures having a storage time difference less than the predetermined time threshold with the time similarity threshold, and if the similarity is less than the time similarity threshold, the terminal adds the corresponding pictures to the classifying picture set.

In the third step, if detecting that the storage time difference between any two pictures is greater than or equal to the predetermined time threshold, the terminal compares the similarity between two pictures having a storage time difference greater than or equal to the predetermined time threshold with the similarity threshold, and if the similarity is greater than the similarity threshold, the terminal adds the corresponding pictures to the classifying picture set.

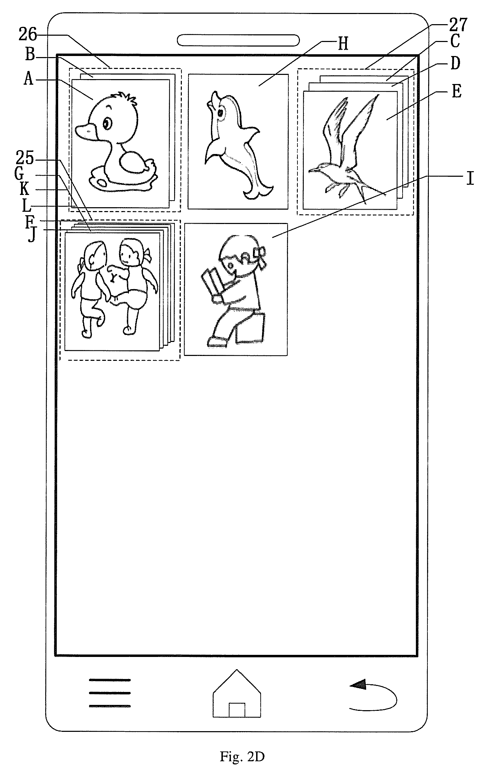

Please refer to the schematic picture classifying diagram shown in Fig. 2D. In Fig. 2D, the similarities between each picture and other pictures calculated by the terminal are shown in Table 1, and the storage time differences between each picture and other pictures are shown in Table 2 (in minutes).

**Table 2**

| | A | B | C | D | E | F | G | H | I | J | K |
|---|---|---|---|---|---|---|---|---|---|---|---|
| B | 3 | | | | | | | | | | |
| C | 20 | 5 | | | | | | | | | |
| D | 3 | 35 | 99 | | | | | | | | |
| E | 5 | 65 | 96 | 7 | | | | | | | |
| F | 11 | 75 | 12 | 20 | 2 | | | | | | |
| G | 24 | 2 | 23 | 7 | 6 | 87 | | | | | |
| H | 12 | 29 | 5 | 7 | 2 | 10 | 4 | | | | |
| I | 10 | 8 | 25 | 26 | 8 | 31 | 37 | 10 | | | |
| J | 25 | 13 | 26 | 35 | 7 | 32 | 45 | 20 | 21 | | |
| K | 55 | 3 | 20 | 27 | 29 | 37 | 1 | 28 | 25 | 96 | |
| L | 33 | 15 | 21 | 0.26 | 23 | 35 | 1 | 30 | 27 | 97 | 99 |

Assuming that the predetermined time threshold is three minutes, the time similarity threshold is 0.4, and the similarity threshold is 0.7, it can be known from Table 2 that, the storage time difference between picture E and picture F is less than three minutes, the storage time difference between picture B and picture G is less than three minutes, the storage time difference between picture E and picture H is less than three minutes, the storage time difference between picture G and picture K is less than three minutes, the storage time difference between picture G and picture L is less than three minutes. Then, the terminal detects respectively whether the similarity between picture E and picture F is greater than the time similarity threshold, whether the similarity between picture B and picture G is greater than the time similarity threshold, whether the similarity between picture E and picture H is greater than the time similarity threshold, whether the similarity between picture G and picture K is greater than the time similarity threshold, whether the similarity between picture G and picture L is greater than the time similarity threshold. Since the similarity between picture G and picture K is greater than the time similarity threshold 0.4 and the similarity between picture G and picture L is greater than the time similarity threshold 0.4, the terminal adds picture G, picture K and picture L to the classifying picture set 25.

Next, the terminal detects whether the similarity between two pictures having a storage time difference greater than or equal to three minutes is greater than the similarity threshold 0.7. Since the similarity between picture A and picture B is greater than the similarity threshold 0.7, both the similarity between picture C and picture D and the similarity between picture D and picture E are greater than the similarity threshold 0.7, the similarity between picture G and picture F is greater than the similarity threshold 0.7, and both the similarity between picture K and picture L and the similarity between picture L and picture J are greater than the similarity threshold 0.7, the terminal adds picture A and picture B to the classifying picture set 26, adds picture C, picture D and picture E to the classifying picture set 27. Moreover, since picture G, picture K and picture L are present in the classifying picture set 25, the terminal adds picture F and picture J to the classifying picture set 25.

In a possible implementation, the terminal may also rank the pictures in an order of storage time from far to near or in an order of storage time from near to far, and then classify the pictures according to the storage time differences and similarities between pictures.

In this way, for each picture, the terminal may detect sequentially whether the storage time difference between the picture and a previous picture is greater than the predetermined time threshold and whether the storage time difference between the picture and a following picture is greater than the predetermined time threshold. If the terminal detects that the storage time difference between the picture and a certain previous picture is greater than or equal to the predetermined time threshold, then the storage time difference between the picture and any picture before the certain previous picture is greater than the predetermined time threshold. If the terminal detects that the storage time difference between the picture and a certain following picture is greater than or equal to the predetermined time threshold, then the storage time difference between the picture and any picture after the certain following picture is greater than the predetermined time threshold.

For example, the terminal ranks the pictures in an order of storage time from near to far as follows:
Picture A: 11:50:00, January 01, 2014
Picture B: 11:05:00, January 01, 2014
Picture F: 11:03:00, January 01, 2014
Picture E: 11:00:00, January 01, 2014
Picture D: 10:10:00, January 01, 2014
Picture C: 10:00:00, January 01, 2014

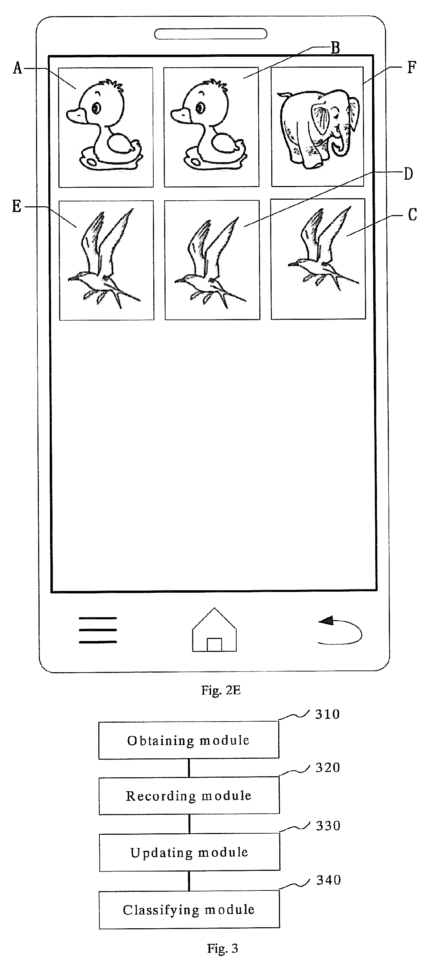

The schematic picture arrangement diagram shown in Fig. 2E illustrates an example of pictures corresponding to the above storage times arranged in a from-near-to-far order. It is assumed that picture E is a reference picture. The terminal then detects sequentially the storage time differences between picture E and pictures before and after picture E. The predetermined time threshold is set in this example to four minutes. The terminal detects that the storage time difference between picture E and picture F is three minutes which is less than the predetermined time threshold (four minutes). Then the terminal detects the storage time difference between picture E and picture B. Since the storage time difference between picture E and picture B is five minutes which is greater than the predetermined time threshold (four minutes), the terminal determines that the storage time difference between picture E and picture A is also greater than the predetermined time threshold. Next, the terminal detects the storage time difference between picture E and picture D, and since the storage time difference between picture E and picture D is ten minutes which is greater than the predetermined time threshold (four minutes), the terminal determines that the storage time difference between picture E and picture C is also greater than the predetermined time threshold. Thus, picture E and picture F are classified according to the similarity and the time similarity threshold, and picture E, picture A, picture B, picture D and picture C are classified according to the similarities and the similarity threshold.

The terminal ranks the pictures according to the storage time. When a first picture having a storage time difference greater than the predetermined time threshold with the reference picture is detected and the detected picture is before the reference picture, the storage time difference between the reference picture and any picture before the detected picture is greater than the predetermined time threshold, and thus the terminal may omit the comparison operation between the reference picture and the pictures before the detected picture. If the detected picture is after the reference picture, then the storage time difference between the reference picture and any picture after the detected picture is greater than the predetermined time threshold, and thus the terminal may omit the comparison operation between the reference picture and the pictures after the detected picture. In this way, the work of comparing storage time differences between pictures is reduced, and the efficiency of classifying pictures is enhanced.

Furthermore, after completing the picture classifying, the terminal may use a picture quality evaluation algorithm to choose a picture with a good quality from the classifying picture set as a presentation picture of the classifying picture set.

In conclusion, with the method for classifying pictures according to the present invention, by obtaining the classifying picture sets, in which a similarity between each two pictures in each classifying picture set is greater than a similarity threshold, by recording an operation instruction triggered with respect to each classifying picture set, by updating the similarity threshold if the operation instruction triggered with respect to any one of the classifying picture sets satisfies a predetermined updating condition, and by classifying pictures according to an updated similarity threshold, a problem that the terminal cannot generate classifying picture sets according to different picture similarity requirements of different users since different users have different similarity requirements on the pictures to be classified may be solved, thus achieving an effect of generating classifying picture sets according to different picture similarity requirements of different users.

In addition, the terminal detects whether the operation instruction is configured for extracting a picture from any one of the classifying picture sets or configured for adding a picture to any one of the classifying picture sets, if the operation instruction is configured for extracting a picture from any one of the classifying picture sets, the terminal increases the similarity threshold, and if the operation instruction is configured for adding a picture to any one of the classifying picture sets, the terminal decreases the similarity threshold. When the operation performed by the user on the classifying picture sets is mainly to extract a picture from any one of the classifying picture sets, the terminal determines that the user desires a higher similarity between pictures in the classifying picture sets, and thus the terminal increases the similarity threshold and classifies the pictures again according to the increased similarity threshold. When the operation performed by the user on the classifying picture sets is mainly to add a picture to any one of the classifying picture sets, the terminal determines that the user desires a lower similarity between pictures in the classifying picture sets, and thus the terminal decreases the similarity threshold and classifies the pictures again according to the decreased similarity threshold.

Fig. 3 is a block diagram of a device for classifying pictures according to an exemplary embodiment. The device for classifying pictures is applied in a terminal, and as shown in Fig. 3, the device for classifying pictures includes an obtaining module 310, a recording module 320, an updating module 330 and a classifying module 340.

The obtaining module 310 is configured to obtain classifying picture sets, in which a similarity between each two pictures in each classifying picture set is greater than a similarity threshold.

The recording module 320 is configured to record an operation instruction triggered with respect to each classifying picture set obtained by the obtaining module 310.

The updating module 330 is configured to update the similarity threshold if the operation instruction triggered with respect to any one of the classifying picture sets satisfies a predetermined updating condition.

The classifying module 340 is configured to classify (sort) pictures according to the updated similarity threshold obtained by the updating module 330.

In conclusion, with the device for classifying pictures according to the present invention, by obtaining the classifying picture sets, in which a similarity between pictures in each classifying picture set is greater than a similarity threshold, by recording an operation instruction triggered with respect to each classifying picture set, by updating the similarity threshold if the operation instruction triggered with respect to any one of the classifying picture sets satisfies a predetermined updating condition, and by classifying pictures according to an updated similarity threshold, a problem that the terminal cannot generate classifying picture sets according to different picture similarity requirements of different users since different users have different similarity requirements on the pictures to be classified may be solved, thus achieving an effect of generating classifying picture sets according to different picture similarity requirements of different users.

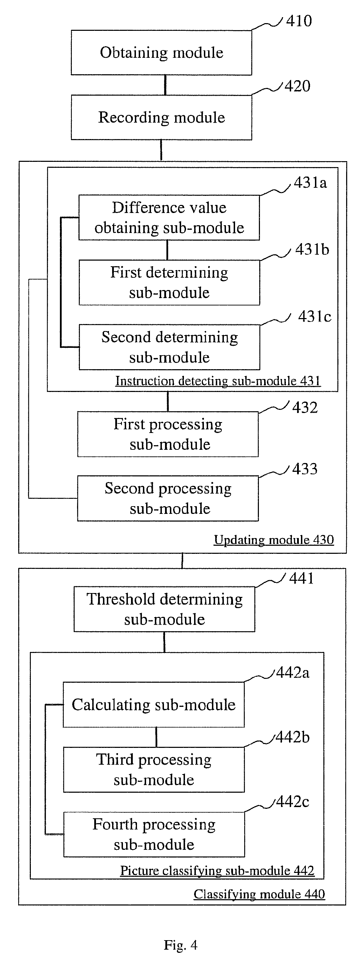

Fig. 4 is a block diagram of a device for classifying pictures according to an exemplary embodiment. The device for classifying pictures is applied in a terminal, and as shown in Fig. 4, the device for classifying pictures includes an obtaining module 410, a recording module 420, an updating module 430 and a classifying module 440.

The obtaining module 410 is configured to obtain classifying picture sets, in which a similarity between each two pictures in each classifying picture set is greater than a similarity threshold.

The recording module 420 is configured to record an operation instruction triggered with respect to each classifying picture set obtained by the obtaining module 410.

The updating module 430 is configured to update the similarity threshold if the operation instruction triggered with respect to any one of the classifying picture sets satisfies a predetermined updating condition.

The classifying module 440 is configured to classify pictures according to the updated similarity threshold obtained by the updating module 430.

In a particular embodiment, the updating module 430 includes an instruction detecting sub-module 431, a first processing sub-module 432 or a second processing sub-module 433.

The instruction detecting sub-module 431 is configured to detect whether the operation instruction is configured for extracting a picture from any one of the classifying picture sets, or configured for adding a picture to any one of the classifying picture sets.

The first processing sub-module 432 is configured to increase the similarity threshold if the instruction detecting sub-module 431 detects that the operation instruction is configured for extracting a picture from any one of the classifying picture sets.

The second processing sub-module 433 is configured to decrease the similarity threshold if the instruction detecting sub-module 431 detects that the operation instruction is configured for adding a picture to any one of the classifying picture sets.

In a particular embodiment, the operation instruction includes an opening instruction, an extracting instruction and an adding instruction, and the instruction detecting sub-module 431 includes a difference value obtaining sub-module 431a, a first determining sub-module 431b or a second determining sub-module 432c.

The difference value obtaining sub-module 431a is configured to multiply a trigger count of the opening instruction by a first weight to obtain a first value, to multiply a trigger count of the extracting instruction by a second weight to obtain a second value, to multiply a trigger count of the adding instruction by a third weight to obtain a third value, to subtract the third value from a sum of the first value and the second value to obtain a difference value.

The first determining sub-module 431b is configured to determine that the operation instruction is configured for extracting a picture from any one of the classifying pictures sets if the difference value obtained by the difference value obtaining sub-module 431a is positive and greater than a first threshold.

The second determining sub-module 431c is configured to determine that the operation instruction is configured for adding a picture to any one of the classifying pictures sets if the difference value obtained by the difference value obtaining sub-module 431a is negative and less than a second threshold.

In a particular embodiment, the classifying module 440 includes a threshold determining sub-module 441and a picture classifying sub-module 442.

The threshold determining sub-module 441 is configured to determine a time similarity threshold according to the updated similarity threshold, in which the time similarity threshold is positively correlated with the similarity threshold, and the time similarity threshold is configured for indicating the similarity threshold between two pictures having a storage time difference less than a predetermined time threshold.

The picture classifying sub-module 442 is configured to classify the pictures according to the updated similarity threshold and the time similarity threshold determined by the threshold determining sub-module 441.

In a particular embodiment, the picture classifying sub-module 442 includes a calculating sub-module 442a, a third processing sub-module 442b and/or a fourth processing sub-module 442c.

The calculating sub-module 442a is configured to calculate the similarity and storage time difference between any two pictures.

The third processing sub-module 442b is configured to classify the pictures according to the calculated similarity and the time similarity threshold if the storage time difference obtained by the calculating sub-module 442a is less than the predetermined time threshold.

The fourth processing sub-module 442c is configured to classify the pictures according to the calculated similarity and the similarity threshold if the storage time difference obtained by the calculating sub-module 442a is greater than or equal to the predetermined time threshold.

In conclusion, with the device for classifying pictures according to the present invention, by obtaining the classifying picture sets, in which a similarity between each two pictures in each classifying picture set is greater than a similarity threshold, by recording an operation instruction triggered with respect to each classifying picture set, by updating the similarity threshold if the operation instruction triggered with respect to any one of the classifying picture sets satisfies a predetermined updating condition, and by classifying pictures according to an updated similarity threshold, a problem that the terminal cannot generate classifying picture sets according to different picture similarity requirements of different users since different users have different similarity requirements on the pictures to be classified may be solved, thus achieving an effect of generating classifying picture sets according to different picture similarity requirements of different users.

In addition, the terminal detects whether the operation instruction is configured for extracting a picture from any one of the classifying picture sets or configured for adding a picture to any one of the classifying picture sets, if the operation instruction is configured for extracting a picture from any one of the classifying picture sets, the terminal increases the similarity threshold, and if the operation instruction is configured for adding a picture to any one of the classifying picture sets, the terminal decreases the similarity threshold. When the operation performed by the user on the classifying picture sets is mainly to extract a picture from any one of the classifying picture sets, the terminal determines that the user desires a higher similarity between pictures in the classifying picture sets, and thus the terminal increases the similarity threshold and classifies the pictures again according to the increased similarity threshold. When the operation performed by the user on the classifying picture sets is mainly to add a picture to any one of the classifying picture sets, the terminal determines that the user desires a lower similarity between pictures in the classifying picture sets, and thus the terminal decreases the similarity threshold and classifies the pictures again according to the decreased similarity threshold.

With respect to the devices in the above embodiments, the specific operation modes of individual modules therein have been described in detail in the embodiments regarding the methods for classifying pictures, which will not be elaborated herein.

Exemplary embodiments of the present invention provide a device for classifying pictures, which can realize the methods for classifying pictures provided by the present invention. The device for classifying pictures includes a processor and a memory configured to store instructions executable by the processor. The processor is configured to:
obtain classifying picture sets, in which a similarity between each two pictures in each classifying picture set is greater than a similarity threshold;
record an operation instruction triggered with respect to each classifying picture set;
if the operation instruction triggered with respect to any one of the classifying picture sets satisfies a predetermined updating condition, update the similarity threshold;
classify pictures according to an updated similarity threshold.

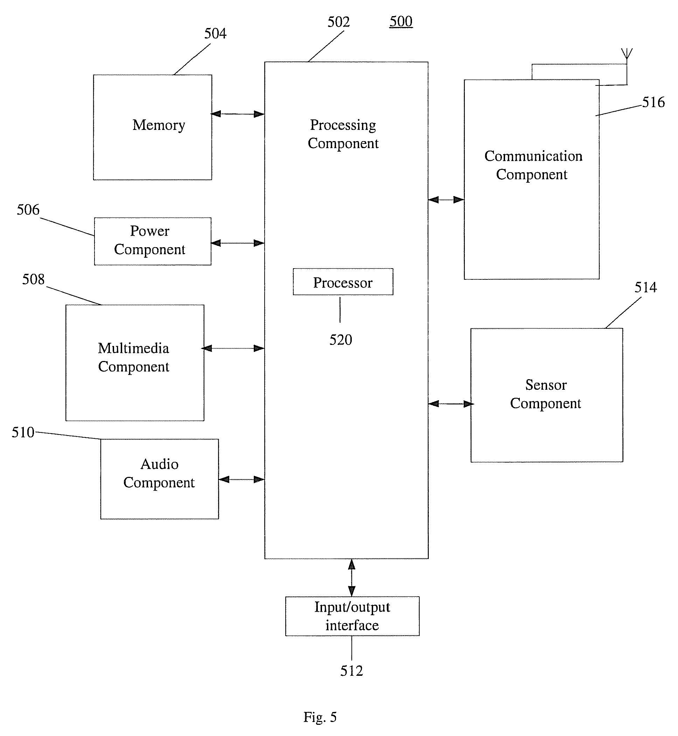

Fig. 5 is a block diagram of a device 500 for classifying pictures according to an exemplary embodiment. For example, the device 500 may be a mobile phone, a computer, a digital broadcast terminal, a message transceiver, a game console, a tablet, a medical device, an exercise equipment, a personal digital assistant, and the like.

Referring to Fig. 5, the device 500 may include one or more of the following components: a processing component 502, a memory 504, a power component 506, a multimedia component 508, an audio component 510, an input/output (I/O) interface 512, a sensor component 514, and a communication component 516.

The processing component 502 typically controls overall operations of the device 500, such as the operations associated with display, telephone calls, data communications, camera operations, and recording operations. The processing component 502 may include one or more processors 520 to execute instructions to perform all or part of the steps in the above described methods. Moreover, the processing component 502 may include one or more modules which facilitate the interaction between the processing component 502 and other components. For instance, the processing component 502 may include a multimedia module to facilitate the interaction between the multimedia component 508 and the processing component 502.

The memory 504 is configured to store various types of data to support the operation of the device 500. Examples of such data include instructions for any applications or methods operated on the device 500, contact data, phonebook data, messages, pictures, video, etc. The memory 504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 provides power to various components of the device 500. The power component 506 may include a power management system, one or more power sources, and any other components associated with the generation, management, and distribution of power in the device 500.

The multimedia component 508 includes a screen providing an output interface between the device 500 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and other gestures on the touch panel. The touch sensors may not only sense a boundary of a touch or swipe action, but also sense a duration time and a pressure associated with the touch or swipe action. In some embodiments, the multimedia component 508 includes a front camera and/or a rear camera. The front camera and the rear camera may receive external multimedia data while the device 500 is in an operation mode, such as a photographing mode or a video mode. Each of the front camera and the rear camera may be a fixed optical lens system or have focus and optical zoom capability.

The audio component 510 is configured to output and/or input audio signals. For example, the audio component 510 includes a microphone (MIC) configured to receive an external audio signal when the device 500 is in an operation mode, such as a call mode, a recording mode, and a voice recognition mode. The received audio signal may be further stored in the memory 504 or transmitted via the communication component 516. In some embodiments, the audio component 510 further includes a speaker to output audio signals.

The I/O interface 512 provides an interface between the processing component 502 and peripheral interface modules, such as a keyboard, a click wheel, buttons, and the like. The buttons may include, but are not limited to, a home button, a volume button, a starting button, and a locking button.

The sensor component 514 includes one or more sensors to provide status assessments of various aspects of the device 500. For instance, the sensor component 514 may detect an open/closed status of the device 500 and relative positioning of components (e.g., the display and the keypad of the device 500). The sensor component 514 may also detect a change in position of the device 500 or of a component in the device 500, a presence or absence of user contact with the device 500, an orientation or an acceleration/deceleration of the device 500, and a change in temperature of the device 500. The sensor component 514 may include a proximity sensor configured to detect the presence of nearby objects without any physical contact. The sensor component 514 may also include a light sensor, such as a CMOS or CCD image sensor, for use in imaging applications. In some embodiments, the sensor component 514 may also include an accelerometer sensor, a gyroscope sensor, a magnetic sensor, a pressure sensor, or a temperature sensor.

The communication component 516 is configured to facilitate wired or wireless communication between the device 500 and other devices. The device 500 can access a wireless network based on a communication standard, such as WiFi, 2G, or 3G, or a combination thereof. In one exemplary embodiment, the communication component 516 receives a broadcast signal or broadcast associated information from an external broadcast management system via a broadcast channel. In one exemplary embodiment, the communication component 516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as the memory 504 including instructions. The above instructions are executable by the processor 518 in the device 500, for performing the above-described methods. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art.

## Claims

1. A method for classifying pictures, comprising:
obtaining (101,201) classifying picture sets, wherein a similarity between each two pictures in each classifying picture set is greater than a similarity threshold;
recording (102,202) an operation instruction triggered with respect to each classifying picture set;
if the operation instruction triggered with respect to any one of the classifying picture sets satisfies a predetermined updating condition, updating (103,203) the similarity threshold;
classifying (104,204) pictures according to an updated similarity threshold.

2. The method according to claim 1, wherein updating the similarity threshold if the operation instruction triggered with respect to any one of the classifying picture sets satisfies a predetermined updating condition comprises:
detecting whether the operation instruction is configured for extracting a picture from any one of the classifying picture sets or configured for adding a picture to any one of the classifying picture sets;
if the operation instruction is configured for extracting a picture from any one of the classifying picture sets, increasing the similarity threshold;
if the operation instruction is configured for adding a picture to any one of the classifying picture sets, decreasing the similarity threshold.

3. The method according to claim 2, wherein detecting whether the operation instruction is configured for extracting a picture from any one of the classifying picture sets or configured for adding a picture to any one of the classifying picture sets comprises:
if the operation instruction comprises an opening instruction, an extracting instruction and an adding instruction, multiplying a trigger count of the opening instruction by a first weight to obtain a first value, multiplying a trigger count of the extracting instruction by a second weight to obtain a second value, multiplying a trigger count of the adding instruction by a third weight to obtain a third value, and subtracting the third value from a sum of the first value and the second value to obtain a difference value;
if the difference value is positive and greater than a first threshold, determining that the operation instruction is configured for extracting a picture from any one of the classifying picture sets; and
if the difference value is negative and less than a second threshold, determining that the operation instruction is configured for adding a picture to any one of the classifying picture sets.

4. The method according to any one of claims 1-3, wherein classifying pictures according to an updated similarity threshold comprises:
determining (204) a time similarity threshold according to the updated similarity threshold, in which the time similarity threshold is positively correlated with the similarity threshold, and the time similarity threshold is configured for indicating a similarity threshold between two pictures having a storage time difference less than a predetermined time threshold;
classifying (205) pictures according to the updated similarity threshold and the time similarity threshold.

5. The method according to claim 4, wherein classifying pictures according to the updated similarity threshold and the time similarity threshold comprises:
calculating the similarity and the storage time difference between any two pictures;
if the storage time difference is less than the predetermined time threshold, classifying the pictures according to the similarity and the time similarity threshold;
if the storage time difference is greater than or equal to the predetermined time threshold, classifying the pictures according to the similarity and the similarity threshold.

6. A device for classifying pictures, comprising:
an obtaining module (310,410), configured to obtain classifying picture sets, wherein a similarity between each two pictures in each classifying picture set is greater than a similarity threshold;
a recording module (320,420), configured to record an operation instruction triggered with respect to each classifying picture set;
an updating module (330,430), configured to update the similarity threshold if the operation instruction triggered with respect to any one of the classifying picture sets satisfies a predetermined updating condition;
a classifying module (340,440), configured to classify pictures according to an updated similarity threshold.

7. The device according to claim 6, wherein the updating module (430) comprises:
an instruction detecting sub-module (431), configured to detect whether the operation instruction is configured for extracting a picture from any one of the classifying picture sets or configured for adding a picture to any one of the classifying picture sets;
a first processing sub-module (432), configured to increase the similarity threshold if the operation instruction is configured for extracting a picture from any one of the classifying picture sets;
a second processing sub-module (433), configured to decrease the similarity threshold if the operation instruction is configured for adding a picture to any one of the classifying picture sets.

8. The device according to claim 7, wherein the operation instruction comprises an opening instruction, an extracting instruction and an adding instruction, and the instruction detecting sub-module (431) comprises:
a difference value obtaining sub-module (431a), configured to multiply a trigger count of the opening instruction by a first weight to obtain a first value, to multiply a trigger count of the extracting instruction by a second weight to obtain a second value, to multiply a trigger count of the adding instruction by a third weight to obtain a third value, and to subtract the third value from a sum of the first value and the second value to obtain a difference value;
a first determining sub-module (431b), configured to determine that the operation instruction is configured for extracting a picture from any one of the classifying picture sets if the difference value is positive and greater than a first threshold; and
a second determining sub-module (431c), configured to determine that the operation instruction is configured for adding a picture to any one of the classifying picture sets if the difference value is negative and less than a second threshold.

9. The device according to any one of claims 6-8, wherein the classifying module (440) comprises:
a threshold determining sub-module (441), configured to determine a time similarity threshold according to the updated similarity threshold, in which the time similarity threshold is positively correlated with the similarity threshold, and the time similarity threshold is configured for indicating a similarity threshold between two pictures having a storage time difference less than a predetermined time threshold;
a picture classifying sub-module (442), configured to classify pictures according to the updated similarity threshold and the time similarity threshold.

10. The device according to claim 9, wherein the picture classifying sub-module (442) comprises:
a calculating sub-module (442a), configured to calculate the similarity and the storage time difference between any two pictures;
a third processing sub-module (442b), configured to classify the pictures according to the similarity and the time similarity threshold if the storage time difference is less than the predetermined time threshold;
a fourth processing sub-module (442c), configured to classify the pictures according to the similarity and the similarity threshold if the storage time difference is greater than or equal to the predetermined time threshold.

11. A device (500) for classifying pictures, comprising:
a processor (502);
a memory (504) configured to store instructions executable by the processor;
wherein the processor is configured to implement the steps of a method for classifying pictures according to any of claims 1-5.

12. A program product having stored therein instructions that, when executed by one or more processors of an apparatus, causes the apparatus to perform the steps of a method for classifying pictures according to any of claims 1-5.
